# EUROPÄISCHE PATENTSCHRIFT

(11) **EP 0 582 795 B1**
(45) Veröffentlichungstag und Bekanntmachung des Hinweises auf die Patenterteilung: **06.12.1995**
(21) Anmeldenummer: 93108604.5
(22) Anmeldetag: 27.05.1993
(51) Int. Cl.: H02H 5/04, F24H 9/20

(54) **Schaltungsanordnung für elektrische Heizgeräte**
Circuit arrangement for electrical heating appliances
Configuration de circuit pour appareils électriques de chauffage

(30) Priorität: 10.08.1992 DE 4226468
(43) Veröffentlichungstag der Anmeldung: 16.02.1994
(73) Patentinhaber: Haschkamp geb. Dreefs, Ernestine, D-96364 Marktrodach (DE); Haschkamp, Joachim, Dipl.-Ing., D-96364 Marktrodach (DE); Haschkamp, Wolfgang, Dipl.-Kfm., D-96364 Marktrodach (DE)
(72) Erfinder: Klopfer, Wilfried, W-8640 Kronach (DE)
(74) Vertreter: Koch, Günther, Dipl.-Ing.

(56) Entgegenhaltungen:
- EP-A- 0 085 202
- FR-A- 2 326 084
- GB-A- 607 813
- GB-A- 1 263 373
- US-A- 4 081 660

## Beschreibung

Die Erfindung bezieht sich auf eine Schaltungsanordnung für elektrische Heizgeräte mit einem Regelthermostaten zur Konstanthaltung der Temperatur und mit einem Bimetall-Thermostaten als Überhitzungsschutz, dessen Schaltkontakt durch einen Heizwiderstand für das Bimetall überbrückt ist, um den Schaltkontakt offenzuhalten, bis nach Trennung vom Netz das Bimetall abgekühlt ist.

Der Regelthermostat bewirkt in Abhängigkeit von der Umgebungstemperatur die Ein- und Abschaltung des Heizgeräte/Heizwiderstandes, während der Überhitzungsschutz dann wirksam werden muß, wenn z.B. bei Abdeckung der Lufteintritt- oder Austrittsschlitze eine Überhitzung mit Brandgefahr zu befürchten ist. Derartige Schaltungsanordnungen werden u.a. auch in Paneel-Heizkörpern eingesetzt, die ihre Wärme einmal über die Oberfläche abstrahlen und z.a. eine Luftumwälzung bewirken. Die Sicherheitsbestimmungen besagen, daß ein solches Gerät auch dann nicht überhitzt werden darf, wenn z.B. ein Handtuch über die Luftaustrittsschlitze gelegt wird. Der Überhitzungsschutz muß dann das Gerät abschalten, aber es darf sich nicht selbsttätig wieder einschalten, wenn eine Abkühlung erfolgt ist, sondern das Gerät muß abgeschaltet bleiben, bis es längere Zeit vom Netz getrennt worden ist. Damit soll gewährleistet werden, daß vor Neueinschaltung das Handtuch oder eine andere Störungsquelle beseitigt werden müssen bevor eine Wiedereinschaltung erfolgt.

Als Überhitzungsschutz wird ein Bimetall-Thermostat eingesetzt, dessen Schaltkontakt durch einen Heizwiderstand überbrückt ist, der in der Regel einen Widerstandswert von 20 kΩ hat. Öffnet der Bimetallkontakt, dann fließt ein kleiner Strom über diesen Heizwiderstand und das Bimetall wird weiter beheizt und der Übertemperaturschutz kann nicht wieder einschalten, weil das Bimetall erhitzt bleibt. Der kleine Strom, der über diesen Widerstand fließt, kann das Gerät nicht aufheizen, da z.B. bei einem 1000-Watt-Gerät die Heizung einen Widerstand von ca. 50Ω hat und der Heizwiderstand für das Bimetall einen Widerstands-wert von ca. 20 kΩ aufweist. Zur Erhaltung der Funktion des Heizwiderstandes im Übertemperaturschutz ist es erforderlich, daß der Regelthermostat für die Heizung geschlossen ist (oder sich wieder schließt). Diese Bedingung ist bei elektronischen Thermostaten nicht gegeben, weil bei geschlossenem elektronischen Thermostat und geöffnetem Schaltkontakt des Übertemperaturschutzes der Stromfluß durch den Heizwiderstand des Übertemperaturschutzes so gering ist, daß der Haltestrom des Triacs im elektronischen Thermostaten unterschritten wird, so daß dieser den Stromkreis unterbricht und kein Heizstrom mehr fließen kann.

Der Erfindung liegt daher die Aufgabe zugrunde, eine Schaltungsanordnung anzugeben, mit der die Sicherheitsbestimmungen auch bei Verwendung eines elektronischen Thermostaten eingehalten werden können, wobei der hierfür erforderliche Schaltungsaufwand gering ist und trotzdem zuverlässig arbeitet.

Gelöst wird die gestellte Aufgabe durch die im Kennzeichnungsteil des Patentanspruchs 1 angegebenen Merkmale.

Durch die Überbrückung wird gewährleistet, daß auch bei Abschaltung des elektronischen Thermostaten ein Stromfluß durch den Heizwiderstand des Übertemperaturschutzes aufrecht erhalten wird. Gleichzeitig ist Sorge dafür getragen, daß der Regelthermostat weiter wirksam die Heizleistung abschalten bzw. verringern kann.

Ein Schaltungselement, welches den Forderungen in optimaler Weise angepaßt ist, wäre ein mechanischer oder elektronischer Schalter, der von einem Betriebszustand auf den anderen umschaltet und über Strom- oder Spannungssensoren gesteuert werden kann.

Eine solche Schaltungsanordnung ist jedoch relativ aufwendig, und der Erfindung liegt die Erkenntnis zugrunde, daß die gestellte Aufgabe auf einfache Weise dadurch gelöst werden kann, daß das den elektronischen Schalter des Regelthermostaten überbrückende Schaltungselement als Kaltleiter ausgebildet ist.

Durch die Anwendung des Kaltleiters ergibt sich ein optimaler Kompromiß, weil bei geringem Stromfluß (nur Aufheizung des Heizwiderstandes des Übertemperaturschutzes) der Widerstandswert des Kaltleiters gering ist, während bei geschlossenem Übertemperatuschutz (Thermostat hat nicht angesprochen) der Stromstoß durch den Kaltleiter im Falle der Abschaltung des Regelthermostaten groß wird, so daß sich der Widerstandswert des Kaltleiters erhöht und so der Regelthermostat bei seiner Abschaltung wirksam werden kann, weil der Nebenstrompfad durch den Kaltleiter (und den Heizwiderstand) nur einen geringen Strom führt.

Dadurch, daß dem Triac im elektronischen Regelthermostaten ein Kaltleiter (PTC) parallelgeschaltet ist, kann ohne zusätzliche Sensoren oder Steuereinrichtungen der angestrebte Zweck erreicht werden. Es sollen für die Erfindung jedoch auch andere Maßnahmen vorbehalten bleiben, die für die beiden Schaltzustände eine wesentliche Änderung des Widerstandes bzw. Leitwertes gewährleisten.

Nachstehend wird die Erfindung anhand eines Ausführungsbeispiels veranschaulicht. In der Zeichnung zeigen:
- Fig. 1: ein den Stand der Technik repräsentierendes Schaltbild einer Heizgeräteschaltung mit mechanischem Regelthermostat und Übertemperaturschutz;
- Fig. 2: eine Heizgeräteschaltung mit elektronischem Thermostat und Überhitzungsschutz gemäß einem Ausführungsbeispiel der Erfindung.

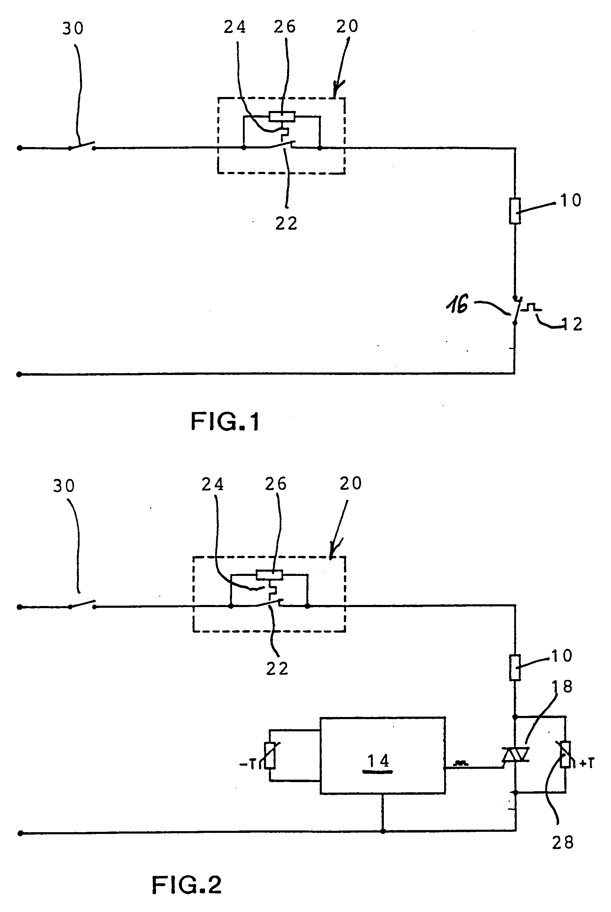

Ein Heizgeräte-Heizwiderstand 10 wird durch einen Regel-Thermostaten an- und abgeschaltet, der gemäß Fig. 1 als mechanischer Thermostat 12 und gemäß Fig. 2 als elektronischer Thermostat 14 ausgebildet ist. Der mechanische Thermostat betätigt einen mechanischen Schalter 16, während der elektronische Thermostat 14 ein elektronisches Schaltglied 18 insbesondere ein Triac in Abhängigkeit von der Raumtemperatur schaltet.

Ein Übertemperaturschutz 20 ist in beiden Fällen in Reihe zum Heizwiderstand 10 und zum Schaltglied des Regelthermostaten geschaltet. Dieser Übertemperaturschutz weist einen mechanischen Schaltkontakt 22 auf, der über einen Thermostaten 24 gesteuert wird und bei Überhitzung öffnet. Parallel zu dem Schaltkontakt 22 liegt ein Heizwiderstand 26 für den Thermostaten 24. Dieser Übertemperaturschutz 20 schaltet das Gerät ab, wenn eine Überhitzung eintritt. Wenn sich das Gerät dann abkühlt, darf der Überhitzungsschutz sich nicht wieder selbständig einschalten, und zu diesem Zweck ist der Heizwiderstand 26 vorgesehen. Solange das Gerät am Netz liegt (und der mechanische Thermostatschalter 16 geschlossen ist) fließt über den Heizwiderstand 26 ein Strom, der den Schaltkontakt 22 geöffnet hält. Erst wenn der Netzschalter 30 längere Zeit ausgeschaltet ist oder das Gerät vom Netz getrennt wurde, läßt der nun nicht mehr beheizte Thermostat 24 den Schaltkontakt 22 in die Einschaltstellung zurückkehren.

Wird als Regelthermostat für die Heizung 10 ein elektronischer Thermostat 14 eingesetzt, so müssen zusätzliche Maßnahmen vorgesehen werden um zu gewährleisten, daß der Übertemperaturschutz abgeschaltet bleibt, weil nach Unterbrechung des Stromkreises durch den Schaltkontakt 22 der Stromfluß über den Heizwiderstand 26 des Übertemperaturschutzes so gering ist, daß der Haltestrom des Triac 18 unterschritten wird und das Triac öffnet, so daß der Übertemperaturschutz keinen Heizstrom mehr erhält.

Um den Stromfluß durch den Heizwiderstand 26 des Übertemperaturschutzes auch bei Unterbrechung des elektronischen Schaltgliedes 18 zu gewährleisten, ist parallel zu diesem Schaltglied 18 ein Schaltungselement 28 geschaltet, welches bei offenem Schaltglied 18 den Stromfluß durch den Heizwiderstand aufrechterhält. Im Falle der Abschaltung des Schaltgliedes 18 wäre im Sinne einer möglichst geringen Verlustleistung ein Kurzschluß zweckmäßig. Dagegen soll im Normalzustand der Widerstandswert dieses Schaltungselementes 28 möglichst unendlich sein, damit beim Öffnen des Schaltgliedes 18 des Regelthermostaten 14 möglichst kein Strom durch den Heizgerätewiderstand 10 fließt. Gemäß dem dargestellten Ausführungsbeispiel wird dies dadurch erreicht, daß das Schaltungselement als Kaltleiter (PTC-Widerstand) ausgebildet ist. Dieser Kaltleiter hat normalerweise einen niedrigen Widerstandswert, d.h. einen Widerstandswert, der bei offenem Schaltglied 18 und geöffnetem Schaltkontakt 22 des Übertemperaturschutzes einen genügend hohen Strom durch den Heizwiderstand 26 fließen läßt, um den Thermostaten auf einer Temperatur zu halten, bei der der Schaltkontakt 22 geöffnet ist.

Wenn bei geschlossenem Schaltkontakt 22 im Normalbetrieb der elektronische Thermostat sein elektronisches Schaltglied 18 öffnet, wäre ein solcher geringer Widerstandswert (oder ein Kurzschluß) schädlich, weil dann der Heizwiderstand 10 des Heizgerätes weiter vom Strom durchflossen bliebe. Infolge der Eigenschaft des Kaltleiters nimmt, veranlaßt durch den Stromfluß, dessen Widerstand schnell zu, so daß der Kaltleiter 28 und damit der Heizwiderstand 10 des Heizgerätes nur noch von einem geringen Strom durchflossen werden.

Wenn dann der Kaltleiter 28 bei Wiedereinschalten des Triac 18 kurzgeschlossen wird, kann er sich wieder abkühlen und den ursprünglichen geringen Widerstandswert wieder einnehmen. Damit werden die Sicherheitsbestimmungen auch bei einem elektronisch geregelten Heizgerät zuverlässig eingehalten, weil der Heizstrom durch den Heizwiderstand des Übertemperaturschutzes auch dann aufrechterhalten bleibt, wenn das Triac abschaltet.

## Patentansprüche

1. Schaltungsanordnung für elektrische Heizgeräte mit einem Regelthermostaten zur Konstanthaltung der Temperatur und mit einem Bimetall-Thermostaten (20) als Übertemperaturschutz, dessen Schaltkontakt (22) durch einen Heizwiderstand (26) für sein Bimetall (24) überbrückt ist, um den Schaltkontakt (22) offenzuhalten bis nach Trennung vom Netz das Bimetall (24) abgekühlt ist,
dadurch gekennzeichnet, daß bei Verwendung eines elektronischen Regelthermostaten (14) ein elektronisches Schaltglied (18) dieses elektronischen Regelthermostaten durch ein Schaltungselement (28), das bei geschlossenem Schaltkontakt (22) des Übertemperaturschutzes (20) einen möglichst hohen elektrischen Widerstand annimmt, und bei offenem Schaltkontakt (22) einen möglichst kleinen elektrischen Widerstand aufweist, überbrückt ist.

2. Schaltungsanordnung nach Anspruch 1,
dadurch gekennzeichnet, daß das Schaltungselement als Kaltleiter (PTC) ausgebildet ist.

3. Schaltungsanordnung nach den Ansprüchen 1 und 2,
dadurch gekennzeichnet, daß das elektronische Schaltglied (18) des Regelthermostaten (14) ein Triac ist.

## Claims

1. Circuit arrangement for electric heating appliances having a regulating thermostat to keep the temperature constant and having a bimetal thermostat (20) as protection against overheating, with its switching contact (22) by-passed by a heating resistor (26) for the bimetal (24) thereof in order to hold the switching contact (22) open until the bimetal (24) has cooled down following disconnection from the electricity supply,
characterised in that if an electronic regulating thermostat (14) is used, an electronic contact element (18) belonging to said electronic regulating thermostat is by-passed by a circuit element (28) which when the switching contact (22) of the overtemperature protection (20) is closed assumes a maximum possible electrical resistance, and when the switching contact (22) is open it exhibits the minimum electrical resistance possible.

2. Circuit arrangement according to claim 1,
characterised in that the circuit element is in the form of a PTC thermistor.

3. Circuit arrangement according to claims 1 and 2,
characterised in that the electronic contact element (18) on the regulating thermostat (14) is a Triac.

## Revendications

1. Circuit pour des appareils électriques de chauffage, comprenant un thermostat de régulation pour maintenir constante la température et un thermostat à bilame (20) qui sert de protection contre la surchauffe et dont le contact de commutation (22) est branché par une résistance de chauffage (26) de son bilame (24) afin de maintenir ouvert le contact de commutation (22) jusqu'à ce que, après débranchement du secteur, le bilame (24) soit refroidi, caractérisé par le fait qu'en cas d'utilisation d'un thermostat de régulation électronique (14), l'organe de commutation électronique (18) de ce thermostat de régulation électronique est shunté par un élément de circuit (28) qui, lorsque le contact de commutation (22) de la protection contre la surchauffe (20) est fermé, adopte une valeur de résistance électrique la plus élevée possible et, lorsque le contact de commutation (22) est ouvert, présente une valeur de résistance électrique la plus faible possible.

2. Circuit suivant la revendication 1, caractérisé par le fait que l'élément de circuit est réalisé sous forme de thermistance à coefficient de température positif.

3. Circuit suivant les revendications 1 et 2, caractérisé par le fait que l'élément de commutation électronique (18) du thermostat de régulation (14) est un triac.
